(19) Europäisches Patentamt / European Patent Office / Office européen des brevets

(11) **EP 3 805 987 B1**

(12) **EUROPEAN PATENT SPECIFICATION**

(45) Date of publication and mention
of the grant of the patent:
**02.10.2024 Bulletin 2024/40**

(21) Application number: **19202196.2**

(22) Date of filing: **09.10.2019**

(51) International Patent Classification (IPC):
$G06V\ 20/56^{(2022.01)}$  $G06V\ 10/774^{(2022.01)}$
$G06V\ 10/46^{(2022.01)}$  $G06V\ 10/52^{(2022.01)}$
$G01S\ 13/86^{(2006.01)}$  $G01S\ 7/41^{(2006.01)}$
$G01S\ 13/931^{(2020.01)}$  $G01S\ 17/931^{(2020.01)}$

(52) Cooperative Patent Classification (CPC):
**G01S 13/931; G01S 17/931; G06V 10/476;
G06V 10/52; G06V 10/7753; G06V 20/56;**
G01S 7/415; G01S 13/865

(54) **ANNOTATING A SPARSELY SAMPLED DATA SET**

ANNOTATION EINES WENIG ABGETASTETEN DATENSATZES

ANNOTATION D'UN ENSEMBLE DE DONNÉES ÉCHANTILLONNÉ DE FAÇON ÉPARSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.04.2021 Bulletin 2021/15**

(73) Proprietor: **Magna Electronics Sweden AB**
**447 37 Vårgårda (SE)**

(72) Inventors:
• **Björkeson, Felix**
**167 51 Stockholm (SE)**
• **Lovtjärn, André**
**167 51 Stockholm (SE)**

(74) Representative: **Westpatent AB**
**Almekärrsvägen 11**
**443 39 Lerum (SE)**

(56) References cited:
• C. STAUFFER ET AL: "Adaptive background mixture models for real-time tracking", PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, 1 January 1999 (1999-01-01), US, pages 246 - 252, XP055549596, ISBN: 978-0-7695-0149-9, DOI: 10.1109/CVPR.1999.784637
• RALF KÄSTNER ET AL: "A Bayesian Approach to Learning 3D Representations of Dynamic Environments", 12TH INTERNATIONAL SYMPOSIUM ON EXPERIMENTAL ROBOTICS (ISER 2010), 21 December 2010 (2010-12-21), XP055684775, DOI: 10.3929/ethz-a-010034936

## Description

The present disclosure relates to methods and devices for annotating data points in a data set. The disclosed techniques are applicable, e.g., to sparsely sampled Light Detection and Ranging (LIDAR) data in vehicular applications, and for scan matching or pose registration in general.

Many different types of sensors sample their surrounding environment sparsely, which means that an object in the environment is only represented by a single or by a few data points that are output from the sensor to represent the entire object. A stretch of road surface may for instance only be seen as a single data point in a cloud of data points, not as a continuous surface. As the sensor moves in relation to the object, the sampled data points associated with the object are likely to change, causing the object to appear as if it is moving even though it is a stationary object. LIDAR sensors often sample the surrounding environment sparsely.

Higher layer systems and control algorithms may have problems interpreting and classifying such sparsely sampled data. For instance, the higher layer algorithms may require significant processing resources in order to classify samples as belonging to a stationary object vs belonging to a non-stationary object due to the apparent motion effects from the sparse sampling.

The documents "Adaptive background mixture models for real-time tracking" (C. STAUFFER ET AL) and "A Bayesian Approach to Learning 3D Representations of Dynamic Environments" (RALF KÁSTNER ET AL) disclose methods for annotating data using a static model of the environment, wherein the static model of the environment comprises a collection of local statistical models.

It is an object of the present disclosure to present methods and devices for annotating a sparsely sampled data set, whereby samples or groups of samples are annotated as stable or stationary despite presence of apparent motion effects due to sparse sampling.

This object is achieved by a method for annotating data points in a data set, where the method comprises obtaining a set of data points associated with an environment sampled by a vehicle sensor and determining a static model of the environment based on the set of data points, wherein the static model of the environment comprises a collection of local statistical models arranged in a hierarchical data structure, where the collection of local statistical models describes local distributions of data points in the environment at different scale levels.

The method further comprises obtaining a new data point associated with the environment, associating the new data point to a corresponding local statistical model comprised in the static model of the environment based on a statistical distance metric from the new data point to the corresponding local statistical model, and annotating the new data point as a stable data point on a given scale level of the hierarchical data structure in case the new data point agrees with the corresponding local statistical model.

This means that samples or groups of samples can be annotated as stable or stationary despite possible presence of apparent motion effects due to sparse sampling. This helps in classifying the nature of movements with respect to previously accumulated data. A label may be a part of sensor output, and can therefore be used as a temporal feature for subsequent sensor fusion systems. A static object, such as a tree, can be labelled as 'stable' on the macro scale, even though it is considered 'unstable' on a smaller scale. This also means that a new data point can be annotated as a stable or unstable data point in dependence of if the new data point is considered close to, or resembling, a current distribution.

According to some aspects, the data points comprise light detection and ranging, LIDAR sensor data and/or radio detection and ranging, RADAR, sensor data.

The present disclosure is thus applicable for data from a broad variety of vehicle sensors.

According to some aspects, a local statistical model comprises a Normal Distribution Transform (NDT) over data points comprised in the associated local area, wherein a covariance of each local area represents a local distribution of the static model of the environment.

A well-known transform, can thus be used.

According to some aspects, the annotating is based on a statistical distance metric from the new data point to the corresponding local statistical model.

This means that a new data point can be annotated as a stable or unstable data point in dependence of if the new data point is considered close to a current distribution.

According to some aspects, the static model of the environment comprises an octree, a quadtree, or an octree map representation.

Well-known and effective representations can thus be used for the present disclosure.

According to some aspects, each cell of the octree, quadtree or octree map is associated with a local statistical model.

According to some aspects, the local distribution is selected from any of; a plane, a sphere, or a cuboid.

According to some aspects, the method comprises extending the static model of the environment based on the new data point in case no corresponding local statistical model is available.

In this way, a new data point that for example corresponds to a region in the static model of the environment in which no previous data points have been obtained, i.e., the region is new ground, can be handled. A new local model based can for example be started on the new data point. This new data point may optionally be annotated as unstable in case no other data is available indicating that the data point is associated with a dynamic object or the like.

According to some aspects, the method comprises updating the static model of the environment based on the new data point in case the new data point does not agree with the corresponding local statistical model.

In this way, a new data point that is the first data point associated with some static structure that is just coming into view by a vehicle sensor can be handled.

According to some aspects, the method comprises excluding the new data point from the static model of the environment in case the new data point is detected as corresponding to a non-stationary object in the environment.

In this manner, a new data point can be annotated as unstable.

This object is also achieved by means of a control unit and a vehicle which are associated with the above advantages.

BRIEF DESCRIPTION OF THE DRAWINGS

The present disclosure will now be described in detail with reference to the appended drawings, where:

> Figure 1 shows a schematic top view of a vehicle with a sensor system;
> Figures 2-3 illustrate examples of hierarchical data structures;
> Figure 4a-4c illustrate effects of sparse sampling;
> Figure 5 is a flow chart illustrating methods;
> Figure 6 schematically illustrates a control unit; and
> Figure 7 shows an example computer program product.

DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

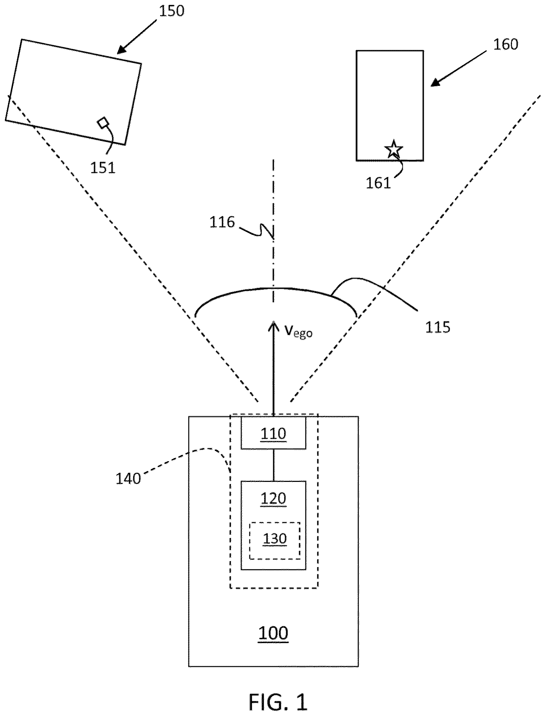

Figure 1 shows a schematic top view of a vehicle 100 equipped with a vehicle sensor system 140. The vehicle moves in a direction with velocity vector $v_{ego}$. The vehicle sensor system 140 comprises a vehicle sensor 110 and a control unit 120. An optional storage module 130 may also be comprised in the control unit 120. The storage module 130 will be discussed in more detail below.

The control unit 120 is arranged to control operation of the vehicle sensor 110, and to obtain data from the vehicle sensor, such as detections or data points corresponding to objects 150, 160 in the vicinity of the vehicle 100.

The vehicle sensor 110 may comprise a single sensor unit or a plurality of sensor units, potentially of different type and/or of different configuration. For instance, the vehicle sensor 110 may comprise any of a LIDAR sensor, a RADAR sensor, a camera sensor, or an ultrasound sensor. The vehicle sensor 110 may also comprise any of a TOF camera system, a structured light system, and a stereo vision system.

The vehicle sensor 110 is arranged to generate a number of data points comprising coordinates in a relative coordinate system, i.e., relative to the location and orientation of the sensor. The coordinates may be Cartesian coordinates or they may be polar coordinates.

The data points may also comprise additional information, such as light intensity values, colour data, signal strength values, frequency values, and measures of signal-to-noise ratio (SNR). One or more time-stamps may also be associated with the detections. The time stamps may be assigned per data point or be common to a set of data points. A LIDAR system using a rolling shutter would most likely assign one-time stamp per data point, but it is also plausible to assign a single time stamp per scan or per data set, albeit with loss of accuracy.

A data point, in general, is a value or collection of values representing a configuration of an object or part of an object in an environment, such as in a vicinity of a vehicle. For instance, in case of a LIDAR sensor, a data point may comprise a value indicating a range and an angle from the LIDAR sensor transceiver, or a set of coordinates describing a point in three-dimensional space. A data point may also comprise a velocity estimate obtained from a Doppler shift of a received waveform, and an angle or bearing obtained from an angle of arrival of a reflected sensor signal waveform. The velocity data may in some cases be quantized into moving or stationary, since some aspects of the methods disclosed herein comprises discarding data points related to moving objects.

Herein, a sensor data point is at times referred to as a sample or as a detection. These terms are considered equivalent unless otherwise explicitly stated.

The storage module 130 may store map data comprising information about a surrounding environment of the vehicle 100.

New data points are produced more or less continuously by the sensor in cycles or scans. Most sensor systems generate detection data on a regular basis, with a cycle interval of T seconds. For instance, the interval T may correspond to a frame length of a radar signal, or to an image processing duration of a camera-based sensor, or to a scan period of a laser scanner. Detections may be stored by the storage module 130 and retrieved for processing as needed.

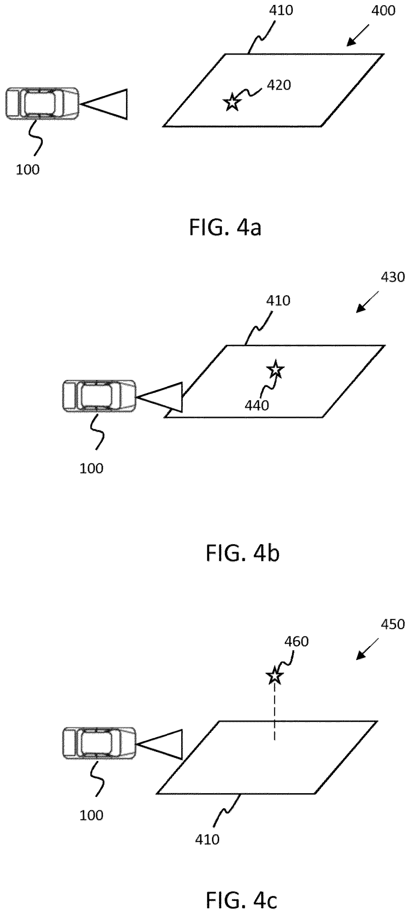

At least one of the sensors may be arranged to sparsely sample the surrounding environment. Herein, to sparsely sample means that an object having an extension in space will only be represented by a single or a few data points each time update or scan. The data point or points representing an object may move over time (over cycles or scans) due to the effects of the sparse sampling. Sparse sampling will be discussed in more detail below in connection to Figures 4a and 4b.

The vehicle sensor 110 is associated with a field of view 115, which may be a 360-degree field of view, or a more limited field of view as shown in Figure 1. Two objects 150, 160 are located in the field of view 115. A first object 160 generates a data point marked by a star 161. A second object 150 generates a data point marked by a square 151.

The first object 160 and the second object 150 may be tracked over time by a tracking algorithm which associates obtained data points with the different objects and continuously estimates, e.g., location and heading of the first and second object. Such tracking algorithms may robustly estimate the heading of a tracked object over time even if signal to noise ratio temporarily is reduced, or only a few detections are obtained in some cycles. Examples of such tracking algorithms include Kalman filters, extended Kalman filters, and Particle filters.

The data points 151, 161 exhibit motion effects due to the sparse sampling, which means that the data points may move from scan to scan even though the objects 150, 160 are stationary objects. This motion may cause problems in higher layer algorithms such as tracking algorithms, which may need to spend significant processing power to classify the objects 150, 160 and associate detections 151, 161 to different objects.

To aid higher layer algorithms, the techniques proposed herein aim at annotating data points or groups of data points as being associated with a stationary object if this is the case, even though the data points exhibit some motion. This way, the higher layer algorithms can more easily handle apparent motion effects. One of the main ideas behind the present disclosure is to define a feature or region as stable or stationary if its temporal variations correspond to a previously computed model of the region - and to provide this feature as external output from the vehicle sensor 110 or from the vehicle control unit 120.

In order to make use of acquired data points, new data sets must often first be aligned with a reference coordinate system or be registered relative to another data set. Such scan matching plays a crucial role in, e.g., simultaneous localization and mapping (SLAM) applications.

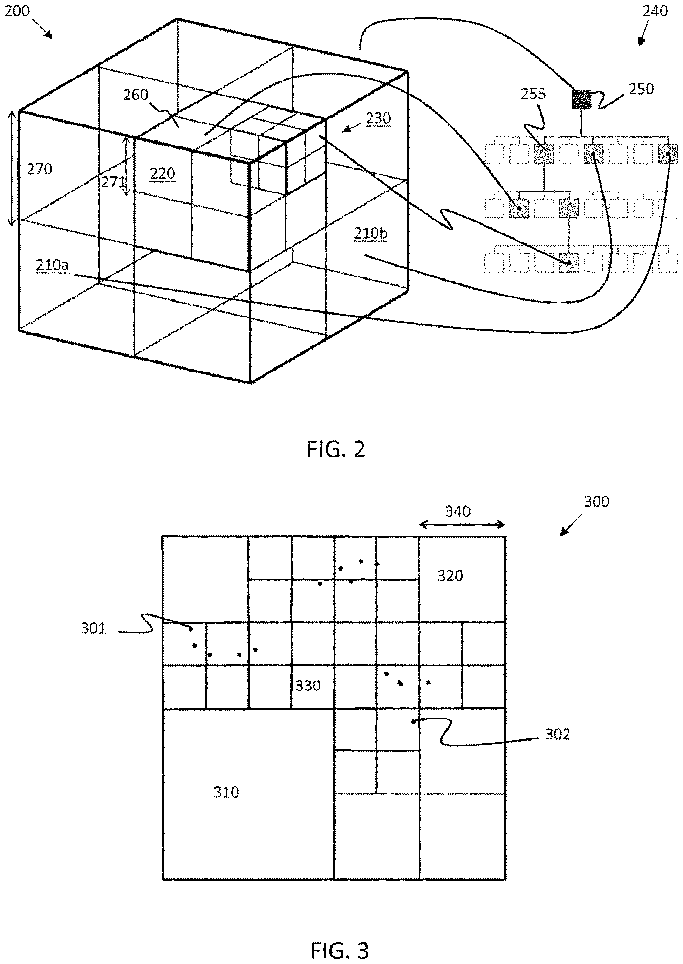

Figure 2 illustrates an example hierarchical data structure 200 which can be used to represent a surrounding environment. The structure in Figure 2 is known as an octree. An octree is a hierarchical tree data structure in which each node or cell has eight children. Octrees are often used to partition a three-dimensional space by recursively subdividing it into eight cells 210a, 210b, 220, 230, or octants. The Octree can also be visualized by a tree structure 240, where a trunk node 250 has eight branches. Each branch leads to a node or cell 255 at a next level which again branches out into eight new branches.

Each cell 210a, 210b, 220, 230 is associated with a cell range 270, 271, where the different cell ranges partition a space at different resolutions. A data point 260 is associated with a unique cell 220 at any given level of the octree based on the data point value and on the cell ranges at the different levels.

A quadtree 300, schematically illustrated in Figure 3, is a two-dimensional version of the octree. Like the octree, a quadtree divides a two-dimensional space into cells 310, 320, 330 having cell ranges 340 at different resolutions at different levels of the quadtree. Data points 301, 302 are again associated with unique cells at each level in the quadtree.

It is appreciated that hierarchical data structures, such as the octree and quadtree data structures, can be efficiently processed by discarding irrelevant cells, e.g., by inserting null pointers at appropriate locations in a memory structure. For instance, cells not associated with any data points, or cells not associated with enough data points to determine a relevant cell feature such as a normal vector, may be discarded to improve processing efficiency. In the example of Figure 3, cell 310 does not contain any data points, and could therefore potentially be ignored during further processing. It may also be advantageous to discard cells comprising data points associated with moving objects, since such data points may impact the end result, according to some aspects an end transformation, negatively.

Other examples of hierarchical data structures include VDB trees, i.e., Volumetric Dynamic grid B-trees, and B+trees. The disclosed techniques are particularly suitable for use with Octrees and similar data structures but are not dependent on any particular type of data structure. Rather, the techniques disclosed herein are applicable together with a wide range of different data structures.

The techniques disclosed herein can be used together with an octree-representation of the world model. The octree subdivides the world into cells of different sizes. By, for example, computing a Normal Distribution Transform (NDT) over the octree, the covariance of each cell will represent the local distribution of the 3D world model. If the distribution resembles a plane, any new measurement will be considered 'stable' if its distance to the plane is low. If the distribution resembles a sphere, a new measurement will be considered 'stable' if the new point is statistically likely to be a part of the distribution. The subdivision of the octree into scale levels makes it possible to find regions that are stable on a large-scale level, but unstable on a smaller scale level, which is an advantage associated with the proposed techniques. A new measurement can therefore both be stable and unstable but on different levels.

Each local region in the data structure comprises a statistical representation of the data points corresponding to the particular region. For example, the cells in the octree may comprise information about a centroid value and a covariance matrix. These statistical measures can be used to determine of the data points in a given region corresponds to a planar structure of to a cuboid structure, or perhaps a spherical structure. Given such local statistical models, a new data point can be compared to the local statistical model to which it corresponds.

For instance, a new data point may be obtained and associated to cell 210a. The previous data points associated to this cell may exhibit a statistical distribution with a variance indicating that the data points all lie on or at least close to a planar structure. Now, if also the new data point is close to this planar structure, then it can be annotated as stable or stationary and optionally also as belonging to the planar structure. However, if the new data point is not in agreement with the local statistical distribution, then the data point may not correspond to the planar structure and should therefore not be labelled as stable or stationary.

According to some aspects, oscillating centroids can be annotated as 'stable' if they move according to the model of the underlying surface

Figure 4a-4c illustrate examples showing the effects of sparse sampling of an environment, and the application of the proposed annotation techniques. Figure 4a illustrates a scenario where a vehicle 100 obtains a new data point 420 corresponding to a patch of road surface 410. The patch of road surface is relatively flat, which means that the statistical distribution of data points obtained from this local area can be expected to show a statistical distribution in agreement with a planar structure. Figure 4b shows a scenario where the vehicle 100 has travelled some distance towards the flat patch of road surface 410. The vehicle 100 obtains a new data point 440 which agrees with the local statistical model comprised in the static model of the environment. This newly obtained data point 440 is therefore annotated as stationary even though it differs from the previously obtained data point 420.

However, as shown in Figure 4c, the vehicle 100 may also obtain a data point 460 which is located some distance away from the patch of road surface. This newly obtained data point 460 is not in agreement with the local statistical model, and should therefore not be annotated as stable, at least until more information is available. Perhaps the newly obtained data point 460 has been generated by some other stationary object that is just coming into view of the sensor and which has not yet made an impact on the static model of the environment which the vehicle is maintaining.

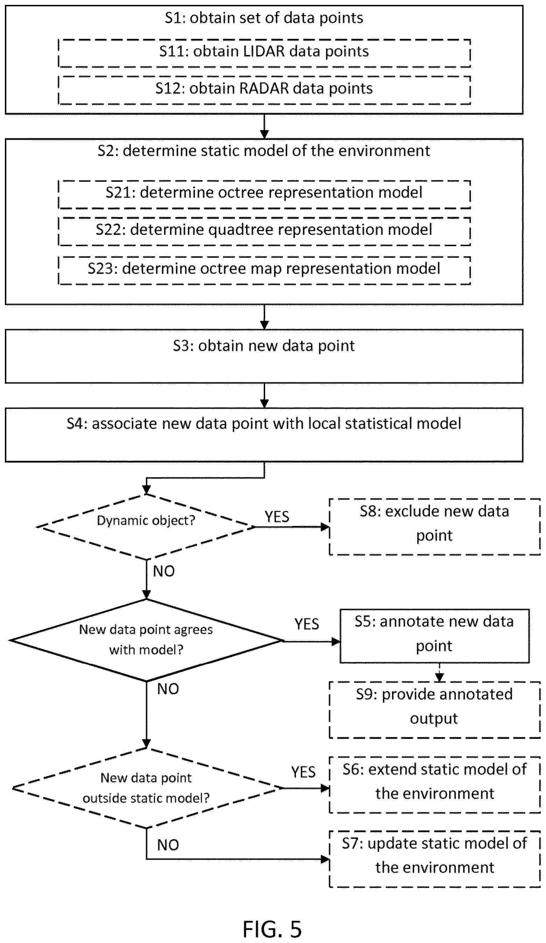

Figure 5 is a flow chart showing methods that summarize the discussions above. There is illustrated a method for annotating data points 151, 161 in a data set. The method comprises obtaining S1 a set of data points associated with an environment sampled by a vehicle sensor 110. The obtaining may, e.g., be mostly based on sensing data points by on-board vehicle sensors. However, the obtaining may also optionally comprise downloading data from a remote server or receiving data from other vehicles. The method also comprises determining S2 a static model 200, 300 of the environment based on the set of data points, wherein the static model of the environment comprises a collection of local statistical models. The static model of the environment may, e.g., be based on an Octree representation as discussed in connection to Figures 2 and 3 above. Each cell at each hierarchical level is then associated with a statistical model, which represents a local statistical model.

The method further comprises obtaining S3 a new data point associated with the environment. The new data point may, e.g., be obtained as a recent sample from a vehicle sensor, or it may be obtained as a sensor sample sensed by some other vehicle or downloaded from a remote server.

The method comprises associating S4 the new data point to a corresponding local statistical model comprised in the static model of the environment. For example, the associating may comprise determining a distance metric between the new data point and the local statistical model in the corresponding region of the static model of the environment. One such distance metric is the probability of sensing the new data point given the local statistical model of data points in the region. Another such distance metric is a Gaussian distance metric given as;

$$exp\left(-\frac{1}{2}(x-\mu)^T W^{-1}(x-\mu)\right),$$

where x is the data point, $\mu$ is the mean of an assumed local statistical distribution, and W is an assumed covariance matrix of the assumed local statistical distribution.

As another example, a local statistical model may be based on a Normal Distribution Transform, NDT, over data points comprised in the associated local area, or Octree cell if that representation is used. A covariance of each local area then represents a local distribution of the static model of the environment. The local area may, e.g., be a cell in an Octree structure, in which case the NDT is applied on data points associated with the cell.

In other words, according to some aspects, the annotating is based on a statistical distance metric from the new data point to the corresponding local statistical model. The collection of local statistical models describes local distributions of data points in the environment.

The method also comprises annotating S5 the new data point as a stable data point in case the new data point agrees with the corresponding local statistical model. The 'agreement' can be implemented in many different ways as is realized by the skilled person. For instance, agreement may be taken to mean that the above-mentioned distance metric should be below some predetermined threshold in order to indicate agreement and to not indicate agreement otherwise.

According to aspects, the data points comprise light detection and ranging, LIDAR sensor data S11 and/or radio detection and ranging, RADAR, sensor data S12.

According to aspects, each cell of the octree, quadtree or octree map is associated with a local statistical model.

According to aspects, the local distribution is selected from any of; a plane, a sphere, or a cuboid.

According to aspects, the method also comprises extending S6 the static model of the environment based on the new data point in case no corresponding local statistical model is available. For instance, a new data point may correspond to a region in the static model of the environment in which no previous data points have been obtained, i.e., the region is new ground. In this case, it may be reasonable to start a new local model based on the new data point. This new data point may optionally be annotated as unstable in case no other data is available indicating that the data point is associated with a dynamic object or the like.

According to aspects, the method also comprises updating S7 the static model of the environment based on the new data point in case the new data point does not agree with the corresponding local statistical model. Perhaps the new data point is the first data point associated with some static structure that is just coming into view by the sensor 110. In this case it makes sense to update the local statistical model to eventually allow more data points from the new structure to be annotated as stable or stationary. According to some aspects, this is done when the updated model has been determined to have a higher certainty than the model before updating. This can according to some aspects be due to the fact that more measurements fit the updated model, and/or that the model before updating has expired time-wise.

According to aspects, the method also comprises excluding S8 the new data point from the static model of the environment in case the new data point is detected as corresponding to a non-stationary object in the environment. Dynamic data points may be indicated by, e.g., Doppler data. These data points are necessarily not comprised in a static object.

According to aspects, the method also comprises providing S9 the annotated data points as an output from a control unit 120.

It is appreciated that objects that are moving in a scene (e.g. other vehicles etc.) may also have 'stable' and 'unstable' regions. Then, the annotation may be done with respect to the local coordinate-system of the vehicle instead of the static world map.

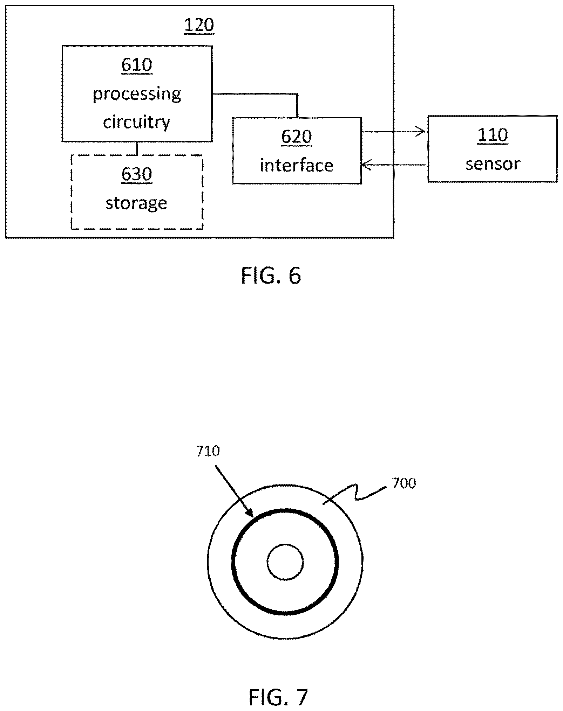

The methods and techniques discussed above can be realized in various forms of hardware. Figure 6 schematically illustrates, in terms of a number of functional units, the components of a control unit 120 according to an embodiment of the above discussions. Processing circuitry 610 is provided using any combination of one or more of a suitable central processing unit CPU, multiprocessor, microcontroller, digital signal processor DSP, etc., capable of executing software instructions stored in a computer program product, e.g. in the form of a storage medium 630. The processing circuitry 610 may further be provided as at least one application specific integrated circuit ASIC, or field programmable gate array FPGA.

Particularly, the processing circuitry 610 is configured to cause the control unit 120 to perform a set of operations, or steps. For example, the storage medium 630 may store the set of operations, and the processing circuitry 610 may be configured to retrieve the set of operations from the storage medium 630 to cause the control unit 120 to perform the set of operations. The set of operations may be provided as a set of executable instructions. Thus, the processing circuitry 610 is thereby arranged to execute methods as herein disclosed.

The storage medium 630 may also comprise persistent storage, which, for example, can be any single one or combination of magnetic memory, optical memory, solid state memory or even remotely mounted memory.

The control unit 120 may further comprise a communications interface 620 for communications with at least one external device, such as a vehicle sensor 110. As such, the communication interface 620 may comprise one or more transmitters and receivers, comprising analogue and digital components and a suitable number of ports for wireline or wireless communication.

The processing circuitry 610 controls the general operation of the control unit 120 e.g. by sending data and control signals to the communication interface 620 and the storage medium 630, by receiving data and reports from the communication interface 620, and by retrieving data and instructions from the storage medium 630. Other components, as well as the related functionality, of the control unit 120 are omitted in order not to obscure the concepts presented herein.

The control unit 120 is configured to annotate data points 151, 161 in a data set. To achieve this, the control unit 120 is adapted to obtain a set of data points associated with an environment sampled by a vehicle sensor 110 and to determine a static model 200, 300 of the environment based on the set of data points, wherein the static model of the environment comprises a collection of local statistical models. The control unit 120 is further adapted to obtain a new data point associated with the environment, to associate the new data point to a corresponding local statistical model comprised in the static model of the environment, and to annotate the new data point as a stable data point in case the new data point agrees with the corresponding local statistical model.

Figure 7 shows a computer program product 700 comprising computer executable instructions 710. The computer executable instructions may, e.g., be executed by a control unit 120 as described above to perform the herein disclosed methods.

**Claims**

1. A method for annotating data points (151, 161) in a data set, the method comprising;

   obtaining (S1) a set of data points associated with an environment sampled by a vehicle sensor (110);
   determining (S2) a static model (200, 300) of the environment based on the set of data points, wherein the static model of the environment comprises a collection of local statistical models arranged in a hierarchical data structure, where the collection of local statistical models describes local distributions of data points in the environment at different scale levels;
   obtaining (S3) a new data point associated with the environment;
   associating (S4) the new data point to a corresponding local statistical model comprised in the static model of the environment based on a statistical distance metric from the new data point to the corresponding local statistical model;
   annotating (S5) the new data point as a stable data point on a given scale level of the hierarchical data structure in case the new data point agrees with the corresponding local statistical model.

2. The method according to claim 1, wherein the data points comprise light detection and ranging, LIDAR sensor data (S11) and/or radio detection and ranging, RADAR, sensor data (S12).

3. The method according to any previous claim, wherein a local statistical model comprises a Normal Distribution Transform, NDT, over data points comprised in the associated local area, wherein a covariance of each local area represents a local distribution of the static model of the environment.

4. The method according to any previous claim, wherein the annotating is based on a statistical distance metric from the new data point to the corresponding local statistical model.

5. The method according to any previous claim, wherein the static model of the environment comprises an octree (S21), a quadtree (S22), or an octree map (S23) representation.

6. The method according to claim 5, wherein each cell of the octree, quadtree or octree map is associated with a local statistical model.

7. The method according to any previous claim, wherein the local distribution is selected from any of; a plane, a sphere, or a cuboid.

8. The method according to any previous claim, comprising extending (S6) the static model of the environment based on the new data point in case no corresponding local statistical model is available.

9. The method according to any previous claim, comprising updating (S7) the static model of the environment based on the new data point in case the new data point does not agree with the corresponding local statistical model.

10. The method according to any previous claim, comprising excluding (S8) the new data point from the static model of the environment in case the new data point is detected as corresponding to a non-stationary object in the environment.

11. The method according to any previous claim, comprising providing (S9) the annotated data points as an output from a control unit (120).

12. A control unit (120) for a sensor system, the control unit being configured to annotate data points (151, 161) in a data set, where the control unit (120) is adapted to:

   obtain a set of data points associated with an environment sampled by a vehicle sensor (110), to determine a static model (200, 300) of the environment based on the set of data points, wherein the static model of the environment comprises a collection of local statistical models arranged in a hierarchical data structure, where the collection of local statistical models describes local distributions of data points in the environment at different scale levels;
   to obtain a new data point associated with the environment;
   to associate the new data point to a corresponding local statistical model comprised in the static model of the environment based on a statistical distance metric from the new data point to the corresponding local statistical model; and to annotate the new data point as a stable data point on a given scale level of the hierarchical data structure in case the new data point agrees with the corresponding local statistical model.

13. A vehicle (100) comprising a control unit (120) according to claim 12.

**Patentansprüche**

1. Verfahren zum Annotieren von Datenpunkten (151, 161) in einem Datensatz, das Verfahren umfassend:

   Erhalten (S1) eines Satzes von Datenpunkten, die mit einer Umgebung, die durch einen Fahrzeugsensor (110) abgetastet wird, verknüpft sind;
   Bestimmen (S2) eines statischen Modells (200, 300) der Umgebung basierend auf dem Satz von Datenpunkten, wobei das statische Modell der Umgebung eine Sammlung von lokalen statistischen Modellen umfasst, die in einer hierarchischen Datenstruktur angeordnet sind, wobei die Sammlung von lokalen statistischen Modellen lokale Verteilungen von Datenpunkten in der Umgebung auf unterschiedlichen Maßstabsebenen beschreibt;
   Erhalten (S3) eines neuen Datenpunkts, der mit der Umgebung verknüpft ist;
   Verknüpfen (S4) des neuen Datenpunkts mit einem entsprechenden lokalen statistischen Modell, das in dem statischen Modell der Umgebung enthalten ist, basierend auf einer statistischen Distanzmetrik von dem neuen Datenpunkt zu dem entsprechenden lokalen statistischen Modell;
   Annotieren (S5) des neuen Datenpunkts als stabiler Datenpunkt auf einer gegebenen Maßstabsebene der hierarchischen Datenstruktur, falls der neue Datenpunkt mit dem entsprechenden lokalen statistischen Modell übereinstimmt.

2. Verfahren nach Anspruch 1, wobei die Datenpunkte Lichterkennungs- und Entfernungsmessungssensordaten, LIDAR-Sensordaten (S11) und/oder Funkerkennungs- und Entfernungsmessungssensordaten, RADAR-Sensordaten (S12) umfassen.

3. Verfahren nach einem der vorstehenden Ansprüche, wobei ein lokales statistisches Modell eine Normalverteilungstransformation, NDT, über Datenpunkte umfasst, die in dem verknüpften lokalen Bereich enthalten sind, wobei eine Kovarianz jedes lokalen Bereichs eine lokale Verteilung des statischen Modells der Umgebung darstellt.

4. Verfahren nach einem der vorstehenden Ansprüche, wobei die Annotation auf einer statistischen Distanzmetrik von dem neuen Datenpunkt zu dem entsprechenden lokalen statistischen Modell basiert.

5. Verfahren nach einem der vorstehenden Ansprüche, wobei das statische Modell der Umgebung eine Octree- (S21), eine Quadtree- (S22) oder eine Octree-Map(S23)-Darstellung umfasst.

6. Verfahren nach Anspruch 5, wobei jede Zelle der Octree-, Quadtree- oder der Octree-Map mit einem lokalen statistischen Modell verknüpft ist.

7. Verfahren nach einem der vorstehenden Ansprüche, wobei die lokale Verteilung aus einem beliebigen von einer Ebene, einer Kugel oder einem Quader ausgewählt wird.

8. Verfahren nach einem der vorstehenden Ansprüche, umfassend ein Erweitern (S6) des statischen Modells der Umgebung basierend auf dem neuen Datenpunkt, falls kein entsprechendes lokales statistisches Modell verfügbar ist.

9. Verfahren nach einem der vorstehenden Ansprüche, umfassend ein Aktualisieren (S7) des statischen Modells der Umgebung basierend auf dem neuen Datenpunkt, falls der neue Datenpunkt nicht mit dem entsprechenden lokalen statistischen Modell übereinstimmt.

10. Verfahren nach einem der vorstehenden Ansprüche, umfassend ein Ausschließen (S8) des neuen Datenpunkts aus dem statischen Modell der Umgebung, falls erkannt wird, dass der neue Datenpunkt einem nicht stationären Objekt in der Umgebung entspricht.

11. Verfahren nach einem der vorstehenden Ansprüche, umfassend ein Bereitstellen (S9) der annotierten Datenpunkte als eine Ausgabe von einer Steuereinheit (120).

12. Steuereinheit (120) für ein Sensorsystem, wobei die Steuereinheit konfiguriert ist, um Datenpunkte (151, 161) in einem Datensatz zu annotieren, wobei die Steuereinheit (120) angepasst ist zum:

   Erhalten eines Satzes von Datenpunkten, die mit einer Umgebung verknüpft sind, die durch einen Fahrzeugsensor (110) abgetastet wird,
   um ein statisches Modell (200, 300) der Umgebung basierend auf dem Satz von Datenpunkten zu bestimmen, wobei das statische Modell der Umgebung eine Sammlung von lokalen statistischen Modellen umfasst, die in einer hierarchischen Datenstruktur angeordnet sind, wobei die Sammlung von lokalen statistischen Modellen lokale Verteilungen von Datenpunkten in der Umgebung auf verschiedenen Maßstabsebenen beschreibt;
   um einen neuen Datenpunkt, der mit der Umgebung verknüpft ist, zu erhalten;
   den neuen Datenpunkt mit einem entsprechenden lokalen statistischen Modell zu verknüpfen, das in dem statischen Modell der Umgebung enthalten ist, basierend auf einer statistischen Distanzmetrik von dem neuen Datenpunkt zu dem entsprechenden lokalen statistischen Modell; und um den neuen Datenpunkt als einen stabilen Datenpunkt auf einer gegebenen Maßstabsebene der hierarchischen Datenstruktur zu annotieren, falls der neue Datenpunkt mit dem entsprechenden lokalen statistischen Modell übereinstimmt.

13. Fahrzeug (100) umfassend eine Steuereinheit (120) nach Anspruch 12.

**Revendications**

1. Procédé d'annotation de points de données (151, 161) dans un ensemble de données, le procédé comprenant ;

l'obtention (S1) d'un ensemble de points de données associés à un environnement échantillonnés par un capteur de véhicule (110) ;
la détermination (S2) d'un modèle statique (200, 300) de l'environnement sur la base de l'ensemble de points de données, dans lequel le modèle statique de l'environnement comprend une collection de modèles statistiques locaux agencés suivant une structure de données hiérarchique, dans lequel la collection de modèles statistiques locaux décrit des distributions locales de points de données dans l'environnement à différents niveaux d'échelle ;
l'obtention (S3) d'un nouveau point de données associé à l'environnement ;
l'association (S4) du nouveau point de données à un modèle statistique local correspondant compris dans le modèle statique de l'environnement sur la base d'une métrique de distance statistique entre le nouveau point de données et le modèle statistique local correspondant ;
l'annotation (S5) du nouveau point de données en tant que point de données stable à un niveau d'échelle donné de la structure de données hiérarchique dans le cas où le nouveau point de données concorde avec le modèle statistique local correspondant.

2. Procédé selon la revendication 1, dans lequel les points de données comprennent des données de capteur de détection et de télémétrie par ondes lumineuses (LIDAR) (S11) et/ou des données de capteur de détection et de télémétrie par ondes radio (RADAR) (S12).

3. Procédé selon l'une quelconque revendication précédente, dans lequel un modèle statistique local comprend une transformée de distribution normale (NDT) sur des points de données compris dans la zone locale associée, dans lequel une covariance de chaque zone locale représente une distribution locale du modèle statique de l'environnement.

4. Procédé selon l'une quelconque revendication précédente, dans lequel l'annotation est basée sur une métrique de distance statistique entre le nouveau point de données et le modèle statistique local correspondant.

5. Procédé selon l'une quelconque revendication précédente, dans lequel le modèle statique de l'environnement comprend une représentation de type arbre d'octants (S21), arbre de quadrants (S22), ou carte d'arbres d'octants (S23).

6. Procédé selon la revendication 5, dans lequel chaque cellule de l'arbre d'octants, de l'arbre de quadrants ou de la carte d'arbres d'octants est associée à un modèle statistique local.

7. Procédé selon l'une quelconque revendication précédente, dans lequel la distribution locale est choisie parmi l'un quelconque parmi un plan, une sphère ou un parallélépipède rectangle.

8. Procédé selon l'une quelconque revendication précédente, comprenant l'extension (S6) du modèle statique de l'environnement sur la base du nouveau point de données dans le cas où aucun modèle statistique local correspondant n'est disponible.

9. Procédé selon l'une quelconque revendication précédente, comprenant la mise à jour (S7) du modèle statique de l'environnement sur la base du nouveau point de données dans le cas où le nouveau point de données ne concorde pas avec le modèle statistique local correspondant.

10. Procédé selon l'une quelconque revendication précédente, comprenant l'exclusion (S8) du nouveau point de données du modèle statique de l'environnement dans le cas où le nouveau point de données est détecté comme correspondant à un objet non stationnaire dans l'environnement.

11. Procédé selon l'une quelconque revendication précédente, comprenant la fourniture (S9) des points de données annotés en tant que sortie d'une unité de commande (120).

12. Unité de commande (120) pour système de capteurs, l'unité de commande étant configurée pour annoter des points de données (151, 161) dans un ensemble de données, l'unité de commande (120) étant conçue pour :

obtenir un ensemble de points de données associés à un environnement échantillonnés par un capteur de véhicule (110),

déterminer un modèle statique (200, 300) de l'environnement sur la base de l'ensemble de points de données, le modèle statique de l'environnement comprenant une collection de modèles statistiques locaux agencés suivant une structure de données hiérarchique, la collection de modèles statistiques locaux décrivant les distributions locales des points de données dans l'environnement à différents niveaux d'échelle ;

obtenir un nouveau point de données associé à l'environnement ;

associer le nouveau point de données à un modèle statistique local correspondant compris dans le modèle statique de l'environnement sur la base d'une métrique de distance statistique entre le nouveau point de données et le modèle statistique local correspondant ; et annoter le nouveau point de données en tant que point de données stable à un niveau d'échelle donné de la structure de données hiérarchique dans le cas où le nouveau point de données concorde avec le modèle statistique local correspondant.

13. Véhicule (100) comprenant une unité de commande (120) selon la revendication 12.

FIG. 1

FIG. 2

FIG. 3

FIG. 4a

FIG. 4b

FIG. 4c

S1: obtain set of data points

S11: obtain LIDAR data points

S12: obtain RADAR data points

S2: determine static model of the environment

S21: determine octree representation model

S22: determine quadtree representation model

S23: determine octree map representation model

S3: obtain new data point

S4: associate new data point with local statistical model

Dynamic object? — YES → S8: exclude new data point

NO

New data point agrees with model? — YES → S5: annotate new data point

NO

S9: provide annotated output

New data point outside static model? — YES → S6: extend static model of the environment

NO

S7: update static model of the environment

FIG. 5

120

610
processing
circuitry

630
storage

620
interface

110
sensor

FIG. 6

710

700

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. STAUFFER.** *Adaptive background mixture models for real-time tracking*

- **RALF KÁSTNER.** *A Bayesian Approach to Learning 3D Representations of Dynamic Environments*